# EUROPÄISCHE PATENTANMELDUNG

(11) **EP 2 322 900 A1**
(43) Veröffentlichungstag der Anmeldung: **18.05.2011**
(21) Anmeldenummer: 10014427.8
(22) Anmeldetag: 10.11.2010
(51) Int. Cl.: G01C 9/28

(54) **Wasserwaage**

(30) Priorität: 16.11.2009 AT 18022009
(71) Anmelder: SOLA-Messwerkzeuge GmbH, 6840 Götzis (AT)
(72) Erfinder: Scheyer, Wolfgang, 6840 Götzis (AT); Zwing, Lukas, 6850 Dornbirn (AT)
(74) Vertreter: Gangl, Markus

(57) **Zusammenfassung**

Wasserwaage (1) mit wenigstens einer in einer Ausnehmung (3, 3') eines Profilkörpers (2) der Wasserwaage (1) angeordneten Libelle (4, 4'), welche gegebenenfalls mit einer Abdeckung (5, 5', 5") versehen ist, wobei zwischen Libelle (4, 4') bzw. Abdeckung (5, 5', 5") und Profilkörper (2) an wenigstens einer Seitenflächen (6, 6', 6") des Profilkörpers (2) eine Stufe (7, 7', 7", 7a', 7a") vorliegt, wobei ein Ausgleichsteil (8, 8', 8") vorgesehen ist, welcher die Stufe (7, 7', 7", 7a', 7a") zwischen Libelle (4, 4') bzw. Libelle (4, 4') mit Abdeckung (5, 5', 5") und Profilkörper (2) zu allen angrenzenden Seitenflächen (6, 6', 6") des Profilkörpers (2) hin ausgleicht,

## Beschreibung

Die Erfindung betrifft eine Wasserwaage mit wenigstens einer in einer Ausnehmung eines Profilkörpers der Wasserwaage angeordneten Libelle, welche gegebenenfalls mit einer Abdeckung versehen ist, wobei zwischen Libelle bzw. Abdeckung und Profilkörper an wenigstens einer Seitenfläche des Profilkörpers eine Stufe vorliegt.

Weiters soll ein Verfahren zur Herstellung der erfindungsgemäßen Wasserwaage angegeben werden.

Derartige Wasserwaagen sind bereits bekannt und werden beispielsweise in der AT 414 044 B gezeigt. Solche und ähnliche Wasserwaagen bestehen im Wesentlichen aus einem stranggepressten Profilkörper, diversen Einbauteilen wie Fassungen, Endkappen usw. und den Libellen selbst. Der Profilkörper weist dabei eine Ausnehmung auf, in die die Libelle eingesetzt wird. Dadurch kommt es zu einer Stufe zwischen dem Profilkörper und der Libelle.

Hierbei sei angemerkt, dass der Name ,,WasserWaage" umgangssprachlich gebräuchlich ist und keinen Rückschluss auf das Füllmaterial der Libelle gibt. Genau genommen weist eine Libelle einen wenigstens teilweise transparenten Behälter auf, welcher mit wenigstens zwei visuell unterschiedlichen Medien unterschiedlicher Dichte gefüllt ist, wobei die Libelle oft vorzugsweise mit einer konvexen Mantelfläche und Markierungen versehen ist.

Maßtoleranzen der Profilkörper sind der Grund, warum mit aktuellem Stand der Technik keine bündigen Libellen hergestellt werden können. Die Ursache, dass sich eine Stufe zwischen Libellen und Profilkörper ergibt, liegt an den, durchaus auch unterschiedlichen, aktuellen Einbaumethoden, bei denen die Libellen und / oder die Libellenfassungen im Profil entweder eingespannt, verklebt, gepresst oder geklemmt etc. werden. Die Libellen werden wegen des Risikos bezüglich Ungenauigkeit der Wasserwaage, Verschmutzung und Beschädigung der Libellen weiters derart gefertigt bzw. montiert, dass diese nicht über den profilkörper vorstehen, das heißt innerhalb der Ausnehmung des Profilkörpers Platz finden. Der Nachteil, der sich aus dieser nach heutigem Stand der Technik unvermeidlichen Stufe bei Wasserwaagen ergibt, ist, dass sich in der Ausnehmung Schmutz etc. ansammeln kann, was zu einer schlechteren Sicht auf die Libelle führen kann.

Aufgabe der Erfindung ist es, eine gegenüber dem Stand der Technik verbesserte Wasserwaage anzugeben.

Dies wird bei der erfindungsgemäßen Wasserwaage dadurch erreicht, dass ein Ausgleichsteil vorgesehen ist, welcher die Stufe zwischen Libelle bzw. Libelle mit Abdeckung und Profilkörper zu allen angrenzenden Seitenflächen des Profilkörpers hin ausgleicht.

Mit anderen Worten führt ein bündig mit den Seitenflächen des Profilkörpers anschließender Ausgleichsteil dazu, dass eine im Wesentlichen durchgehende, ebene Seitenfläche der Wasserwaage geschaffen wird, bei der keine verbleibende Ausnehmung des Profilkörpers an dieser Seitenfläche des Profilkörpers mehr vorhanden ist und sich somit darin kein Schmutz ansammeln kann. Ebenso führt diese Bündigkeit bei einer Horizontallibelle dazu, dass entlang dieser Seitenfläche der Wasserwaage durchgehende, gerade Striche, wie zum Beispiel Markierungen an einer Wand, vorgenommen werden können, was bis dato durch die verbleibende Ausnehmung des Profilkörpers nicht möglich war.

Ein weiterer Vorteil der Verwendung des Ausgleichsteiles ist, dass bereits bestehende, zum Stand der Technik gehörende Libellen weiterhin verwendet werden können und auch nicht gezwungenermaßen neue Wasserwaagen gebaut werden müssen, da der Ausgleichsteil ebenso auch erst nachträglich in eine Ausnehmung einer bestehenden, zum Stand der Technik gehörenden Wasserwaage angeordnet werden könnte.

Weitere vorteilhafte Ausführungsformen der Erfindung sind in den abhängigen Ansprüchen definiert und werden im Folgenden genauer erläutert.

Gemäß einem bevorzugten Ausführungsbeispiel kann vorgesehen sein, dass der Ausgleichsteil die Stufen zwischen Libelle bzw. Libelle mit Abdeckung und Profilkörper zu zwei, vorzugsweise drei, angrenzenden Seitenflächen des Profilkörpers hin ausgleicht, wodurch sich kein Schmutz an der Libelle ablagern kann. Ebenso wird es dadurch ermöglicht, dass gerade und ununterbrochene Markierungen entlang aller angrenzenden Seitenflächen des Profilkörpers ermöglicht werden.

Weiters kann bevorzugt vorgesehen sein, dass der Profilkörper im Wesentlichen als Hohlprofil ausgebildet ist. Hohlprofile als Profilkörper haben sich als gut geeignet erwiesen, um bei Wasserwaagen zum Einsatz zu gelangen. Sie sind - von ihren Abmessungen her gesehen - exakt herstellbar und besonders leicht, speziell wenn - wie heute üblich - als Material eine Aluminiumlegierung verwendet wird. Ebenso sind natürlich auch andere Materialien geeignet um als Hohlprofil ausgebildet und bei einer Wasserwaage eingesetzt zu werden.

Besonders vorteilhaft hat es sich erwiesen, wenn der Ausgleichsteil bereichsweise. vorzugsweise im Wesentlichen vollständig, für sichtbares Licht transparent ausgebildet ist, da somit die Libelle uneingeschränkt sichtbar ist und es zu keinerlei Einschränkungen beim Ablesevorgang der Libelle kommt.

Besonders bevorzugt kann vorgesehen sein, dass eine Seitenwand, vorzugsweise die Seitenwände, des Ausgleichsteils zumindest bereichsweise zurückgesetzt ist, wodurch Beschädigungen des Ausgleichsteils vermieden werden, wenn die Wasserwaage an eine Fläche gehalten wird, da ein Abstand zwischen dem Ausgleichsteil und der Fläche verbleibt.

Als besonders vorteilhaft hat es sich dabei herausgestellt, wenn der Ausgleichsteil bereichsweise, vorzugsweise im Wesentlichen vollständig, witterungsbeständig und / oder strahlungsbeständig ausgebildet ist, da somit gewährleistet wird, dass auch nach langjähriger Benutzung der Wasserwaage die Werte der Lichttransmission hoch sind und dies zu positiven optischen Eigenschaften der Wasserwaage bzw. dem Ausgleichsteil und der Sichtbarkeit auf die Libelle beiträgt. Besonders die Beständigkeit gegen ultraviolettes Licht sei hier dezidiert als wünschenswert hervorgehoben.

Als vorteilhaft hat es sich weiters herausgestellt, wenn der Ausgleichsteil eine bereichsweise, vorzugsweise im Wesentlichen vollständig, nichthaftende und / oder kratzfeste und / oder spiegelungsfreie und/oder selbstheilende Oberfläche aufweist, da sich somit kein Schmutz an der Oberfläche ansammeln kann und es ebenso zu keiner Beschädigung der Oberfläche durch entlang der Oberfläche geführte Markierstifte etc. kommen kann. Eine spiegelungsfreie Oberfläche ermöglicht eine uneingeschränkte Sicht auf die Libelle, wodurch eine exakte Ablesung durchführbar ist. Durch eine selbstheilende Oberfläche können entstandene Kratzer selbsttätig wieder entfernt werden und sorgen somit für eine freie Sicht auf die Libelle.

Als vorteilhaft hat es sich herausgestellt, wenn der Ausgleichsteil bereichsweise, vorzugsweise im Wesentlichen vollständig, aus einer aushärtbaren Vergussmasse, vorzugsweise im Wesentlichen aus Epoxidharz, ausgebildet ist, da eine aushärtbare Vergussmasse recht einfach in die verbleibende Ausnehmung zwischen der Libelle und dem Profilkörper eingebracht werden kann.

Bevorzugt kann weiters vorgesehen sein, dass der Ausgleichsteil bereichsweise, vorzugsweise im Wesentlichen vollständig, aus einem thermoplastischen Kunststoff, vorzugsweise im Wesentlichen aus Polymethylmethacrylat (Plexiglas), ausgebildet ist, da Thermoplaste sehr gut formbar sind. Ebenso ist natürlich jedes andere Material, das entsprechende optische und feste Eigenschaften hat - wie etwas Glas etc. - geeignet.

Gemäß einem möglichen Ausführungsbeispiel kann vorgesehen sein, dass der Ausgleichsteil mit dem Profilkörper vergossen ist, da somit jegliche gussfähige Materialien zum Einsatz kommen können um die verbliebene Ausnehmung des Profilkörpers aufzufüllen. Durch das Ausgießen der verbliebenen Ausnehmung wird ein spaltfreier Übergang zwischen dem Ausgleichsteil und dem Profilkörper der Wasserwaage erreicht, was exakt plane und durchgängige, unterbrechungsfreie Seitenflächen der Wasserwaage schafft.

Gemäß einem bevorzugten Ausführungsbeispiel kann vorgesehen sein, dass der Ausgleichsteil bereichsweise, vorzugsweise im Wesentlichen vollständig, aus einem transparenten keramischen Werkstoff, vorzugsweise im Wesentlichen aus Aluminiumoxynitrid, ausgebildet ist, da transparente keramische Werkstoffe hervorragende optische Eigenschaften als auch eine große Härte aufweisen.

Besonders bevorzugt kann vorgesehen sein, dass der Ausgleichsteil, vorzugsweise im Wesentlichen vollständig, aus einem Material mit im Wesentlichen gleichen optischen Eigenschaften wie das Material der Libelle ausgebildet ist.

Günstigerweise ist der Ausgleichsteil, vorzugsweise im Wesentlichen vollständig, aus dem gleichen Material wie die Libelle ausgebildet, da es somit zu keiner Abweichung in den optischen Eigenschaften der Wasserwaage kommt.

Als besonders vorteilhaft hat es sich herausgestellt, wenn der Ausgleichsteil mindestens eine, wenigstens bereichsweise selbsthaftende Schicht aufweist, welche an dem Ausgleichsteil montierbar und demontierbar ist, wobei die Schicht zumindest bereichsweise, vorzugsweise im Wesentlichen vollständig, für sichtbares Licht transparent ausgebildet ist. Durch eine zusätzliche selbsthaftende Schicht tritt der wünschenswerte Effekt auf, dass, sollte es zu einer Beschädigung der obersten Schicht kommen, diese auf einfache Art und Weise ausgetauscht werden kann und weiters der Ausgleichsteil geschützt ist. Diese selbsthaftende und kratzfeste Schicht kann auch in mehrfacher Weise ausgeführt sein, was dazu führt, dass diese Schichten eine nach der anderen, je nach dem, wie stark verschmutzt oder zerkratzt sie sind, entfernt werden können, ähnlich den Sichtfolien bei Sturzhelmvisieren.

Gemäß einem bevorzugten Ausführungsbeispiel kann vorgesehen sein, dass die Wasserwaage eine Befestigungsvorrichtung aufweist, mit der der Ausgleichsteil, vorzugsweise werkzeuglos, an der Wasserwaage montierbar und/oder, vorzugsweise werkzeuglos, demontierbar ist, da durch eine derartige Befestigungsvorrichtung der Ausgleichsteil ebenso nachträglich an einer Wasserwaage angebracht werden kann und, sollte es zu einer Beschädigung kommen, dieser ausgetauscht werden kann.

Gemäß einem möglichen Ausführungsbeispiel kann vorgesehen sein, dass der Ausgleichsteil einen Lupeneffekt aufweist, wodurch eine bessere Ablesegenauigkeit erreicht wird.

Als besonders vorteilhaft hat es sich dabei herausgestellt, wenn der Ausgleichsteil derart ausgebildet ist, dass die Messfläche frei bleibt, da somit der Ausgleichsteil nicht die Messgenauigkeit der Wasserwaage beeinflusst.

Gemäß einem möglichen Ausführungsbeispiel kann vorgesehen sein, dass der Profilkörper bereichsweise, vorzugsweise im Wesentlichen vollständig, aus einem transparenten keramischen Werkstoff, vorzugsweise im Wesentlichen aus Aluminiumoxynitrid, ausgebildet ist, da dieses Material hervorragende optische Eigenschaften aufweist und über eine sehr große Härte verfügt.

Ebenso hat es sich als vorteilhaft herausgestellt, wenn der Innenraum des als Hohlkörper ausgebildeten Profilkörper bereichsweise, vorzugsweise im Wesentlichen vollständig aus, vorzugsweise im Wesentlichen aus Polyurethan bestehendem, Montageschaum ausgebildet ist. Durch das Ausschäumen der Wasserwaage, genau genommen des als Hohlkörper ausgebildeten Profilkörpers der Wasserwaage, wird erreicht, dass somit auch in den Hohlkörper kein Schmutz etc. eindringen kann. Bei Kontakt mit Wasser könnte sich eine derart ausgebildete Wasserwaage nicht befüllen und wäre somit schwimmend ausgebildet.

Die Erfindung betrifft weiters ein Verfahren zur Herstellung einer Wasserwaage, insbesondere nach einem der Ansprüche 1 bis 19, wobei in einem Verfahrensschritt die Libelle bzw. die Libelle mit Abdeckung in dem Profilkörper angeordnet wird und in einem weiteren Verfahrensschritt ein Ausgleichsteil in den verbliebenen Raum der Ausnehmung eingebracht wird und den Raum, vorzugsweise im Wesentlichen vollständig, ausfüllt.

Auch besonders vorteilhaft hat es sich erwiesen, wenn das Ausgleichsteil aus einem aushärtbarem Material ausgebildet ist und durch Spritzgießen in den verbliebenen Raum der Ausnehmung eingebracht wird und den Raum der Ausnehmung, vorzugsweise im Wesentlichen vollständig, ausfüllt, da durch Spritzgießen sehr präzise und ebene Oberflächenstrukturen erzielbar sind.

Weiters kann bevorzugt vorgesehen sein, dass das Ausgleichsteil aus einem aushärtbarem Material ausgebildet ist und durch Eingießen, vorzugsweise im Wesentlichen von Epoxidharz, in den verbliebenen Raum der Ausnehmung eingebracht wird und den Raum der Ausnehmung, vorzugsweise im Wesentlichen vollständig, ausfüllt, da ein aushärtbares Material auf einfache Art und Weise durch Gießen in die Ausnehmung eingebracht werden kann.

Als besonders vorteilhaft hat es sich dabei herausgestellt, wenn in einem weiteren Verfahrensschritt der als Hohlkörper ausgebildete Profilkörper, vorzugsweise im Wesentlichen vollständig mit Polyurethan, ausgeschäumt wird. Das Ausschäumen führt dazu, dass somit auch keine anderen Materialien mehr in einen als Hohlkörper ausgebildeten Profilkörper eindringen können und somit gewährleistet wird, dass der ursprüngliche Herstellungszustand auch nach langjähriger Verwendung beibehalten wird.

Gemäß einem möglichen Ausführungsbeispiel kann vorgesehen sein, dass in einem weiteren Verfahrensschritt die Oberfläche des Ausgleichsteils an die angrenzende Seitenfläche des Profilkörpers angepasst, vorzugsweise abgeschliffen, wird, sodass durch die Seitenfläche des Profilkörpers und der Oberfläche des Ausgleichsteils eine im Wesentlichen plane Fläche ausgebildet ist, da dadurch eine sehr hohe Genauigkeit zwischen der Oberfläche des Ausgleichsteiles und der Oberfläche der angrenzenden Seitenflächen des Profilkörpers führt. Ein Ausgleichsteil, der über die Ausnehmung und über die Seitenfläche des Profilkörpers hinausragt, ermöglicht es, dass der Überschuss in einem weiteren Verfahrensschritt angepasst werden kann und somit eine exakte, durchgängige und plane Oberfläche an den Seitenflächen der Wasserwaage geschaffen werden kann.

Günstigerweise wird in einem weiteren Verfahrensschritt die Oberfläche des Ausgleichsteils an zwei, vorzugsweise drei, angrenzende Seitenflächen des Profilkörpers angepasst, vorzugsweise abgeschliffen, wird, sodass durch die Seitenflächen des Profilkörpers und die Oberflächen des Ausgleichsteils zwei, vorzugsweise drei, im Wesentlichen plane Flächen ausgebildet sind, wodurch an allen angrenzenden Seitenflächen des Profilkörpers exakte plane Ebenen mit dem Ausgleichsteil gebildet werden und es somit zu keiner Verschmutzung der Libelle kommt und im Weiteren es ermöglicht wird, exakte Markierungen mit der Wasserwaage an einer Wand durchzuführen.

Weitere Einzelheiten und Vorteile der vorliegenden Erfindung werden anhand der Figurenbeschreibung unter Bezugnahme auf die in der Zeichnung dargestellten Ausführungsbeispiele im Folgenden näher erläutert. Darin zeigen:

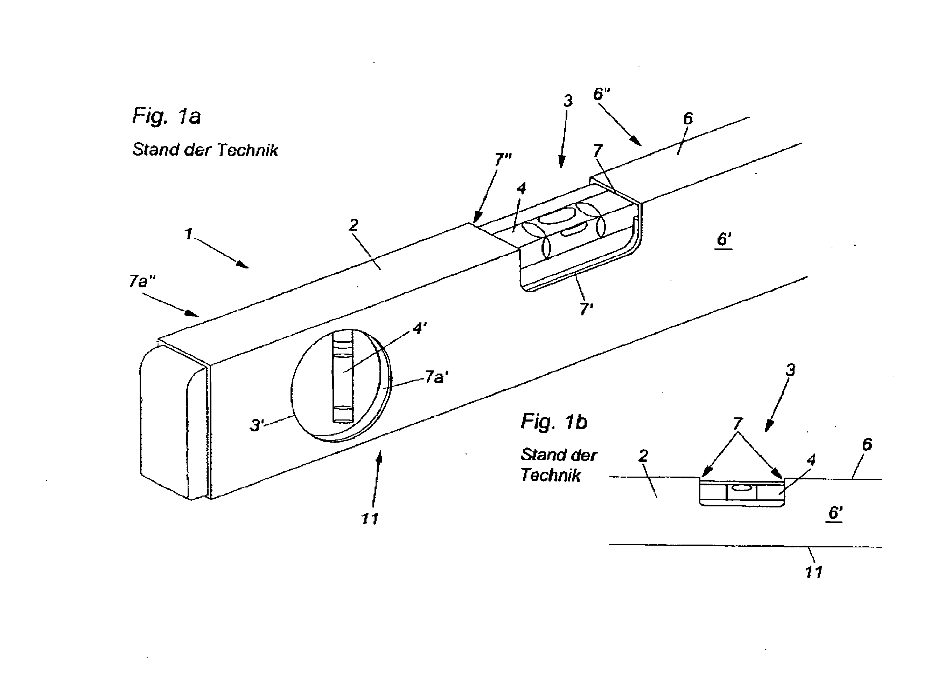

- Fig. 1a: eine perspektivische Ansicht einer Wasserwaage, Stand der Technik,
- Fig, 1 b: Vorderansicht einer Wasserwaage mit Horizontallibelle, Stand der Technik,
- Fig. 1 c: perspektivische Ansicht einer Wasserwaage, Stand der Technik,
- Fig. 1d: Vorderansicht einer Wasserwaage mit Horizontallibelle mit Abdeckung, Stand der Technik,
- Fig. 2a: eine perspektivische Explosionsdarstellung einer Wasserwaage mit Ausgleichsteilen
- Fig. 2b: eine perspektivische Ansicht einer Wasserwaage mit Ausgleichsteilen,
- Fig. 2c: Vorderansicht einer Horizontallibelle mit Ausgleichsteil,
- Fig. 2d: perspektivische Ansicht einer Wasserwaage mit Ausgleichsteil,
- Fig. 2e: Vorderansicht einer Horizontallibelle mit Abdeckung und Ausgleichsteil,
- Fig. 2f: perspektivische Ansicht einer Wasserwaage mit Ausgleichsteil und Befestigungsvorrichtung,
- Fig. 3a: perspektivische Ansicht einer Wasserwaage mit überstehenden Ausgleichsteilen,
- Fig. 3b: Vorderansicht eines überstehenden Ausgleichsteiles,
- Fig. 3c: perspektivische Ansicht einer Wasserwaage mit zusätzlicher Schicht,
- Fig.4a: eine perspektivische Ansicht einer Wasserwaage mit bündigem, abgesenkten Ausgleichsteil,
- Fig.4b: Vorderansicht einer Wasserwaage mit bündigem, abgesenktem Ausgleichsteil bei der Horizontallibelle, und
- Fig. 5: eine perspektivische Ansicht einer durchsichtigen Wasserwaage.

Fig. 1a zeigt eine perspektivische Ansicht einer Wasserwaage 1 mit zwei Libelle, einer Horizontailibelle 4 und einer Vertikallibelle 4', die in einem Profilkörper 2, welcher hier beispielsweise als Hohlprofil ausgeführt ist, nach dem Stand der Technik angeordnet sind. Die Anordnung der Libellen 4, 4' erfolgt dabei in den Ausnehmungen 3, 3' des Profilkörpers 2. Der Profilkörper 2 weist dabei eine Messfläche 11 auf, die gegenüber der Horizontallibelle 4 und parallel zur Seitenfläche 6 angeordnet ist. An die Horizontallibelle 4 schließen die Seitenflächen 6, 6', 6" des Profilkörpers 2 an. An die Vertikallibelle 4' schließen die Seitenflächen 6' und 6" des Profilkörpers 2 an. Herstellungsbedingt ergibt sich durch die Anordnung der Libellen 4, 4' in den Ausnehmungen 3, 3' des Profilkörpers 2 die Stufen 7, 7', 7" von der Horizontallibelle 4 zu den Seitenflächen 6, 6', 6" des Profilkörpers 2, bei der Vertikallibelle 4' ergeben sich die Stufen 7a', 7a" zu den Seitenflächen 6' und 6" des Profilkörpers 2. In den Raum zwischen der Horizontallibelle 4 und dem verbleibenden Teil der Ausnehmung 3 des Profilkörpers 2 kann Schmutz etc. eindringen und somit die Libelle 4 beschädigen bzw. die Sicht darauf beeinträchtigen. Ebenso ist es durch die Stufen 7, 7' und 7" nicht möglich, entlang der Seitenflächen 6, 6' und 6" des Profilkörpers 2 eine durchgehende gerade Linie an einer Wand oder ähnlichem zu markieren. Bezüglich der Verschmutzung bzw. der Sicht auf die Vertikallibelle 4' gilt eben erwähntes im gleichen Maße, da zwischen der Libelle 4' und den Seitenflächen 6' und 6" sich die Stufen 7a' und 7a" befinden, wodurch somit ein Raum an den Stufen 7a' und 7a" in der Ausnehmung 3' des Profilkörpers 2 verbleibt.

Fig. 1b zeigt eine Vorderansicht einer Horizontallibelle 4, welche im Profilkörper 2 einer Wasserwaage 1 nach dem Stand der Technik angeordnet ist. Zwischen Horizontallibelle 4 und der Seitenfläche 6 des Profilkörpers 2 ist die Stufe 7 erkenntlich, wodurch die Horizontallibelle 4 und die Seitenfläche 6 nicht bündig anschließen. Somit kann entlang der Seitenfläche 6 des Profilkörpers 2 keine gerade Markierung an einer Wand oder ähnlichem durchgeführt werden. Ebenso kann Schmutz an die Horizontallibelle 4 gelangen, als sich auch in der verbleibenden Ausnehmung 3 des Profilkörpers 2 ansammeln und somit die Sicht auf die Horizontallibelle 4 beeinträchtigen.

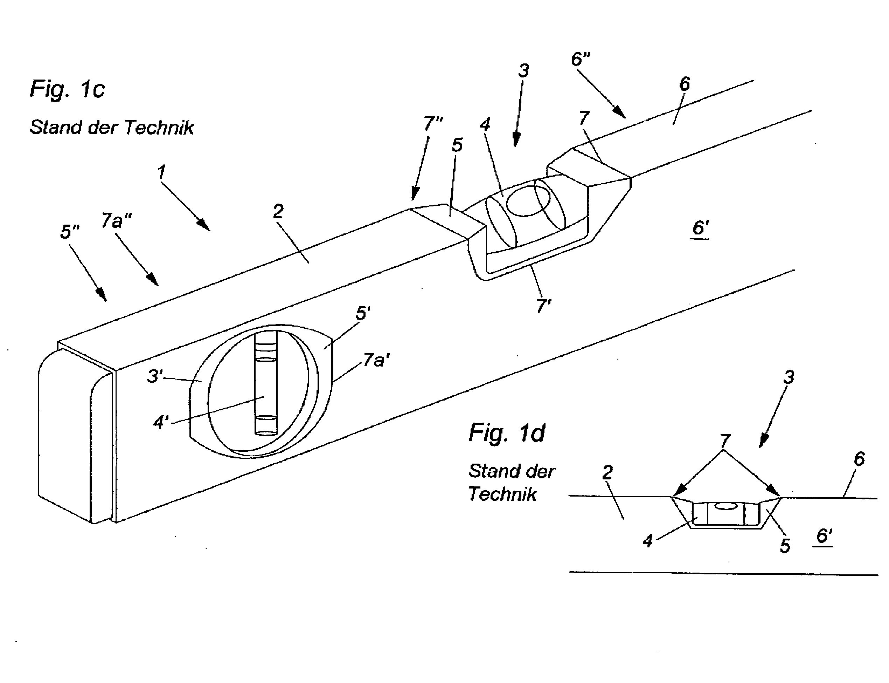

Fig. 1c zeigt eine perspektivische Darstellung einer Wasserwaage nach dem Stand der Technik. Hierbei sind in die Ausnehmungen 3, 3' des Profilkörpers 2 Libellen 4, 4' mit Abdeckung 5, 5', 5" angeordnet. Es ergeben sich ebenso bei der Horizontallibelle 4 die Stufen 7, 7', 7" zwischen der Abdeckung 5 und den Seitenflächen 6, 6', 6" des Profilkörpers 2. Bei der Vertikallibelle 4' ergeben sich ebenso die Stufen 7a' und 7a" zwischen den Abdeckungen 5', 5" und den Seitenflächen 6' und 6" des Profilkörpers 2.

Fig. 1d zeigt eine Horizontallibelle 4 mit Abdeckung 5 in einem Profilkörper 2 einer Wasserwaage 1 nach dem Stand der Technik. Auch hier ergibt sich, wie in Figur 1b gezeigt, eine Stufe 7 zu der Seitenfläche 6 des Profilkörpers 2. Nicht dargestellt sind hierbei die Stufen 7' und 7", welche sich natürlich ebenso zu den Seitenflächen 6' und 6" des Profilkörpers 2 ergeben.

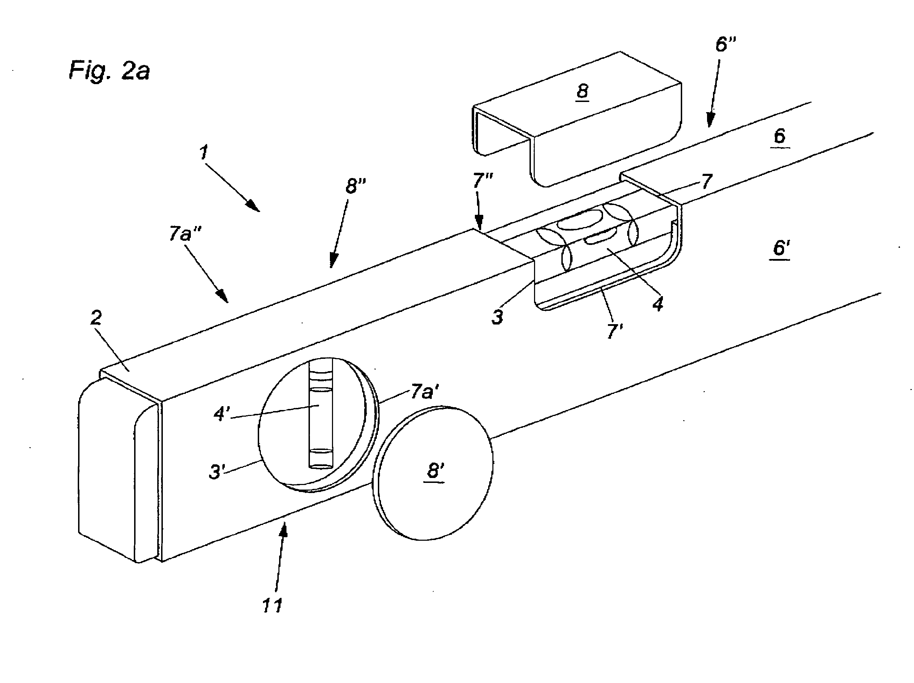

Fig. 2a zeigt einen Profilkörper 2 mit Libellen 4, 4', die in den Ausnehmungen 3, 3' des Profilkörpers 2 angeordnet sind. Die Stufen 7, 7', 7", die sich bei der Horizontallibelle 4 dabei zu den Seitenflächen 6, 6', 6" des Profilkörpers 2 ergeben, werden mit dem Ausgleichsteil 8 ausgeglichen, wodurch der Ausgleichsteil 8 bündig an alle angrenzende Seitenflächen 6, 6', 6" des Profilkörpers 2 anschließt. Somit kann entlang der Seitenfläche 6,6', 6" des Profilkörpers 2 kein Schmutz etc. an die Horizontallibelle 4 gelangen, ebenso kann entlang der Seitenflächen 6, 6'. 6" des Profilkörpers 2 eine gerade Linie an einer Wand oder ähnlichem markiert werden. Bei der Vertikalllbelle 4' wird die Stufe 7a' zur Seitenfläche 6' des Profilkörpers 2 mittels des Ausgleichsteils 8' ausgeglichen, an der Seitenfläche 6" wird die Stufe 7a" (nicht dargestellt) mit dem Ausgleichsteil 8" (nicht dargestellt) auf gleiche Art und Weise ausgeglichen. Somit sind die Ausgleichsteile 8' und 8" bündig mit allen angrenzenden Seitenflächen 6' und 6" des Profilkörpers 2. Somit kann auf beiden Seiten der Vertikallibelle kein Schmutz an die Libelle vordringen und sie ist ebenso, wie die Horizontallibelle 4, vor Beschädigung geschützt. Bevorzugt werden diese Ausgleichsteile 8, 8', 8" natürlich für sichtbares Licht transparent ausgebildet, wodurch eine uneingeschränkte Sicht auf die Libellen 4, 4' ermöglicht wird. Ebenso ist es natürlich vorstellbar, dass diese Ausgleichsteile 8, 8', 8" eine reine Schutzfunktion für die Libellen 4, 4' erfüllen sollen und als nicht durchsichtige Abdeckungen ausgeführt sind, wodurch die Libellen 4, 4' bei einem Transport oder bei ihrer Lagerung geschützt sind. In diesem Ausführungsbeispiel sind die Ausgleichsteile 8, 8', 8" durchsichtig, witterungsbeständig und beständig gegen ultraviolettes Licht ausgeführt, ebenso weisen sie eine nichthaftende, kratzfeste bzw. selbstheilende und reflexionsfreie Oberfläche auf, wodurch eine hohe Ablesegenauigkeit gegeben ist und sie nicht leicht beschädigt werden können und es ebenso möglich ist, durchgehende gerade Markierungen an Wänden durchzuführen, wenn ein Bleistift oder ähnliches entlang einer Kante der Wasserwaage 1 geführt wird. Das Material des Ausgleichsteils 8, 8', 8" ist in diesem Fall Plexiglas, ebenso wäre natürlich jeder andere Kunststoff oder auch Glas oder ähnliches, was harte, kratzfeste und durchsichtige Eigenschaften hat, vorstellbar. Natürlich kann für den Ausgleichsteil 8, 8', 8" auch das gleiche Material wie für die Libellen 4, 4' verwendet werden, oder ein Material mit den gleichen oder ähnlichen optischen Eigenschaften wie das Material der Libellen 4, 4'. In diesem Ausführungsbeispiel weisen die Ausgleichsteile 8, 8', 8" keinen Lupeneffekt auf, ebenso wäre es aber natürlich vorstellbar, dass die Ausgleichsteile 8, 8', 8" einen Lupeneffekt aufweisen.

Vorteilhafterweise kann der in diesem Ausführungsbeispiel als Hohlkörper ausgebildete Profilkörper 2 ausgeschäumt werden, was dazu führt, dass sich auch in dem Innenraum der Wasserwaage kein Schmutz oder andere Materialien ansammeln können.

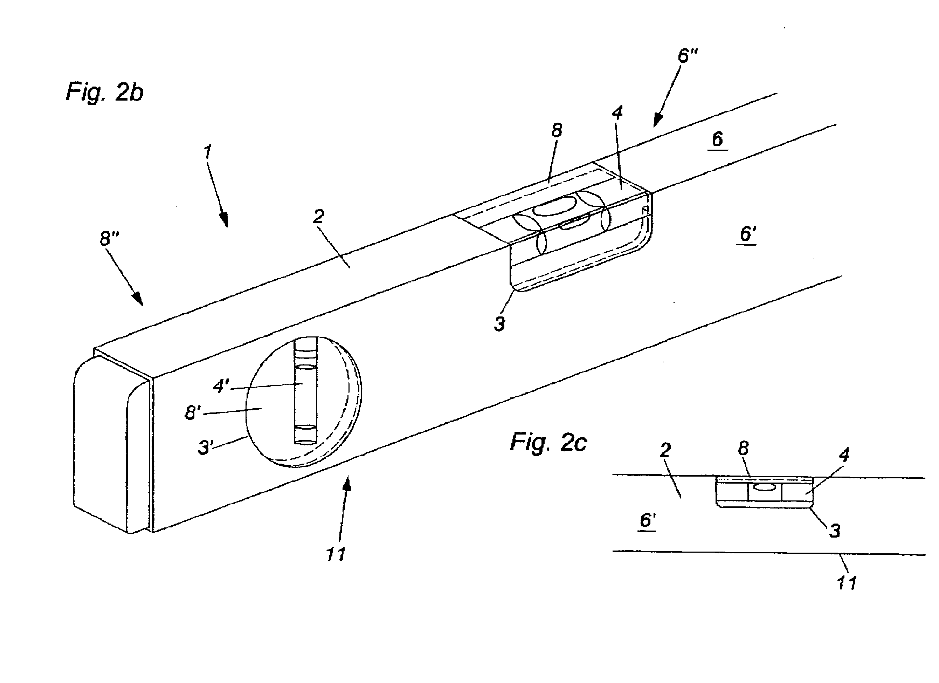

Fig. 2b und Fig. 2c zeigen die Ausgleichsteile 8, 8', 8" eingebracht in den Ausnehmungen 3, 3' des Profilkörpers 2, wodurch bündige Übergänge vom Ausgleichsteil 8, 8', 8" zu allen angrenzenden Seitenflächen 6, 6', 6" des Profilkörpers 2 geschaffen werden, die Stufen 7, 7', 7", 7a', 7a" (nicht dargestellt) sind somit nicht mehr vorhanden. In Fig. 2a wurde gezeigt, dass ein fester Ausgleichsteil 8, 8', 8" in den Profilkörpers 2 eingebracht wurde, in Fig. 2b und 2c werden Ausgleichsteile 8, 8', 8" gezeigt, welche ebenso durch Eingießen in die Ausnehmung 3, 3' des Profilkörpers 2 eingebracht hätten werden können. Das Eingießen könnte natürlich ebenso mittels eines Spritzgussverfahrens erfolgen. Wichtig ist dabei nur, dass nach dem Gussvorgang bzw. dem Eingießen der Masse des Ausgleichsteils 8, 8', 8" und dem Aushärten dieser Ausgleichsteile 8, 8', 8" Bündigkeit mit allen angrenzenden Seitenflächen 6, 6', 6" des Profilkörpers 2 vorliegt, und die Messfläche 11 der Wasserwaage 1 frei bleibt, um die Messgenauigkeit der Wasserwaage 1 nicht zu beeinflussen. Somit ist eine Wasserwaage 1 gegeben, welche an allen Libellen 4, 4' bündige Übergänge zu allen angrenzenden Seitenflächen 6. 6', 6" durch die Ausgleichsteile 8, 8', 8" aufweist.

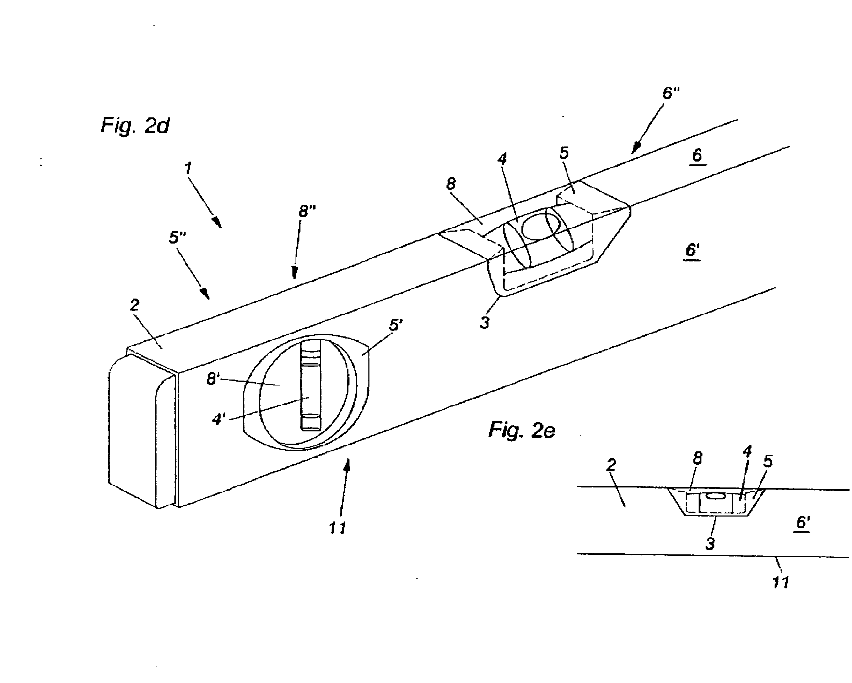

Fig. 2d und 2e zeigen ebenso die eingebrachten Ausgleichsteile 8, 8', 8" in eine Wasserwaage 1 wie eben gezeigt in den Fig. 2b und 2c, mit dem einzigen Unterschied, das die Libellen 4 und 4' dabei mit Abdeckungen 5 ,5', 5" versehen sind.

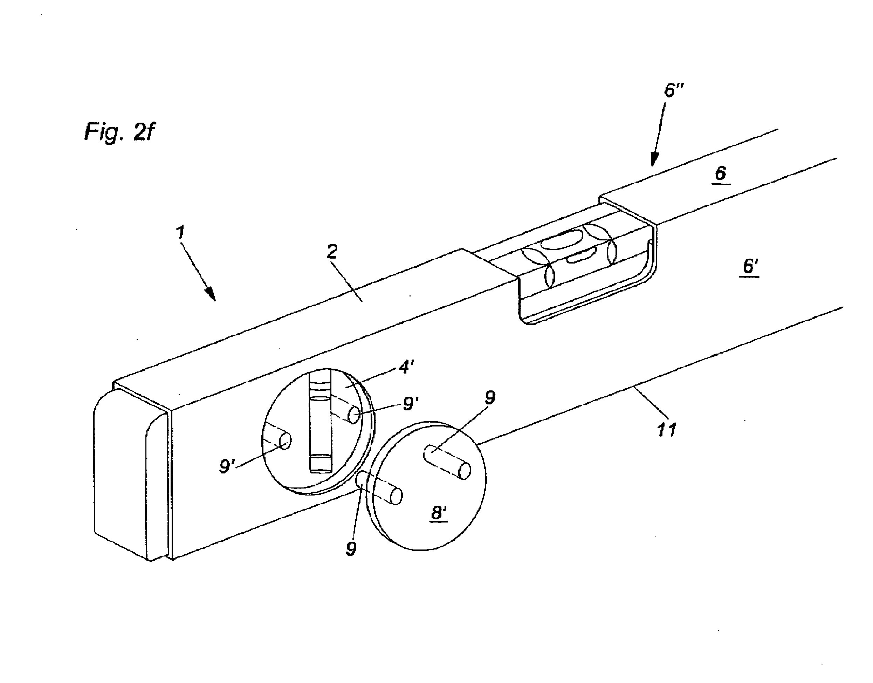

Fig. 2f zeigt eine Wasserwaage 1, bei der die Vertikallibelle 4' und der Ausgleichsteil 8' eine Befestigungsvorrichtung 9, 9' aufweisen, womit der Ausgleichsteil 8' an der Wasserwaage bzw. der Vertikallibelle 4' angebracht werden kann. Somit wird es ermöglicht, dass der Ausgleichsteil 8' positionsgenau und eventuell bei einer Beschädigung auch austauschbar an der Wasserwaage 1 angebracht werden kann. Ebenso wäre es natürlich auch vorstellbar, dass die Befestigungsvorrichtung 9, 9' nicht am Ausgleichsteil 8' bzw. der Vertikallibelle 4' ausgebildet ist, sie könnte auch am Profilkörper 2 ausgebildet sein. Ebenso ist natürlich vorstellbar, dass die Befestigungsvorrichtung bei der Horizontallibelle 4 bzw. am Profilkörper 2 oder dem Ausgleichsteil 8 vorhanden ist (nicht dargestellt). So könnte es zum Beispiel durch einfaches Anklipsen des Ausgleichsteiles 8, 8', 8" (nicht dargestellt) ermöglicht werden, die Ausgleichsteile 8, 8', 8" austauschbar montierbar und demontierbar auszuführen.

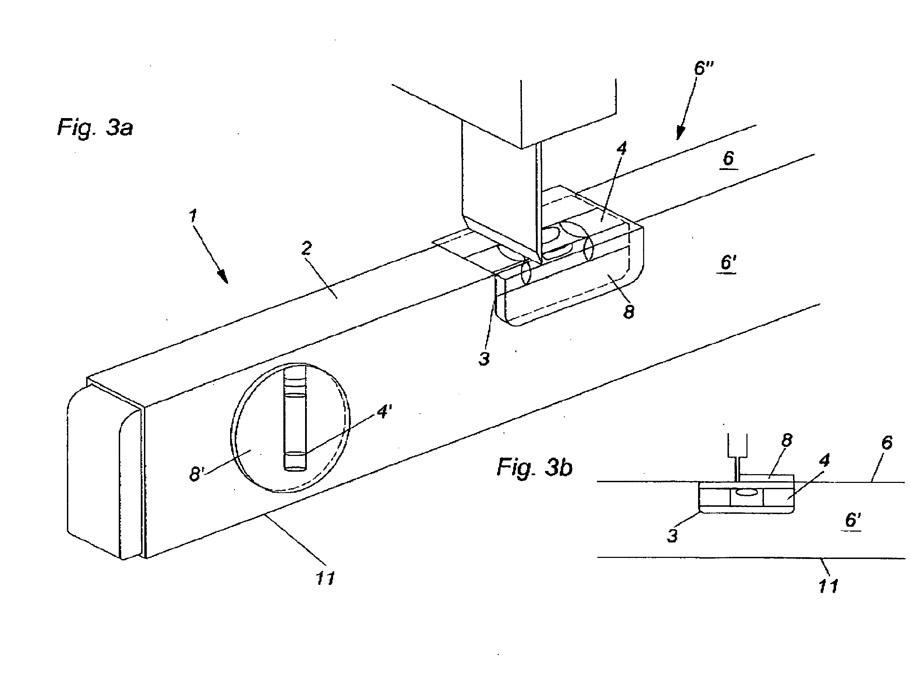

In Fig. 3a und 3b ist dargestellt, dass die Ausgleichsteile 8, 8' die Ausnehmungen 3, 3' des Profilkörpers 2 überragen und wie anschließend diese die Seitenflächen 6, 6', 6" des Profilkörpers 2 überragende Teile mechanisch entfernt werden können und somit exakte, plane Übergänge von den Seitenflächen 6, 6', 6" des Profilkörpers 2 zu den Ausgleichsteilen 8, 8' geschaffen werden.

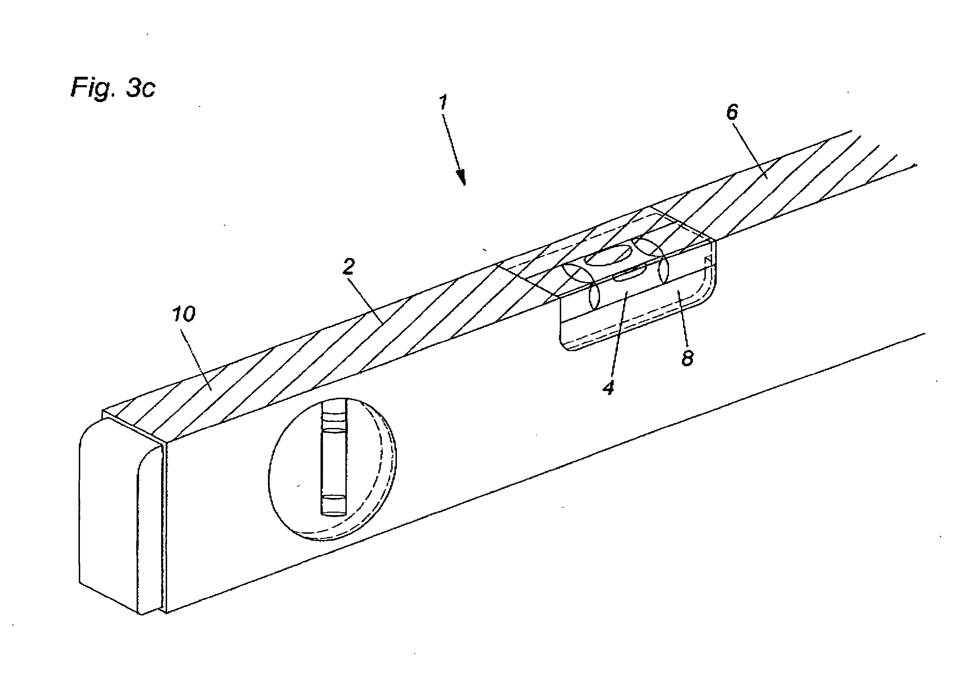

Fig. 3c zeigt eine Wasserwaage 1 die auf der Seitenfläche 6 und dem Ausgleichsteil 8 eine Schicht 10 aufweist, welche für sichtbares Licht durchsichtig und auf der Seitenfläche 6 und dem bündigen Ausgleichsteil 8 angebracht werden kann. Ebenso wäre es natürlich vorstellbar, dass diese Schicht 10 nur am Ausgleichsteil 8 angeordnet ist. Diese Schicht 10 dient dazu, dass der Ausgleichsteil 8 geschützt ist. Dadurch, dass diese Schicht 10 als dünne Folie ausgeführt wird, kann ebenso eine gerade Markierung entlang der Seitenfläche 6 des Profilkörpers 2 erfolgen, auch wenn sich die Schicht 10 nur am Ausgleichsteil 8 aufgebracht ist. Ebenso ist es vorstellbar, dass mehrere dieser Schichten 10 übereinander angebracht werden, wodurch jeweils eine dieser Schichten 10 nach Beschädigung bzw. Verschmutzung durch Abziehen entfernt werden kann und somit wieder volle Sichtbarkeit auf die Libelle 4 hergestellt wird. Ebenso wäre es natürlich denkbar, dass die Schicht 10 eine Lasche aufweist, welche leicht lösbar oder gelöst von der Wasserwaage 1 ausgebildet ist um ein leichtes Abziehen der Schicht 10 vom Ausgleichsteil 8 bzw. der Seitenfläche 8 zu gewährleisten. Bei der Vertikallibelle 4' wäre eine derartige Schicht 10 ebenso vorstellbar und wünschenswert um den Ausgleichsteil 8', 8" zu schützen (nicht dargestellt).

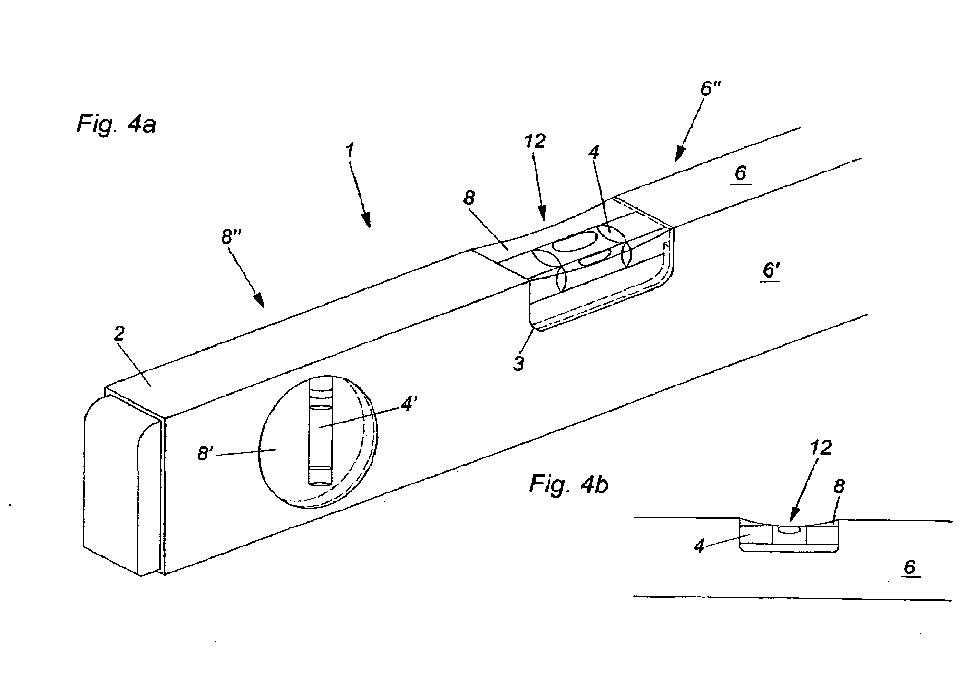

Fig. 4a und 4b zeigen eine Wasserwaage 1 mit bündig an die Seitenflächen 6, 6', 6" des Profilkörpers 2 angrenzenden Ausgleichsteilen 8, 8', 8". Dabei weist der Ausgleichsteil 8 der Horizontallibelle 4 eine leichte Absenkung, vorzugsweise im Bereich von 1 bis 3 Zehntel Millimeter, auf. Eine derartige Absenkung ist natürlich an allen drei Seitenflächen des Ausgleichsteils 8 der Libelle 4, als auch an den beiden Ausgleichsteilen 8', 8" der Libelle 4' vorgesehen, in diesem Ausführungsbeispiel jedoch nicht dargestellt. Der Effekt, der durch diese Absenkung 12 erzielt wird, ist, dass es zu keiner Beschädigung der Ausgleichsteile 8, 8', 8" kommt wenn die Wasserwaage 1 an eine Wand gehalten und an dieser Wand verschoben wird, da durch die Absenkung 12 die Wasserwaage 1 ausschließlich mit dem Profilkörper 2 und nicht mit den Ausgleichsteilen 8, 8', 8" an der Wand anliegt.

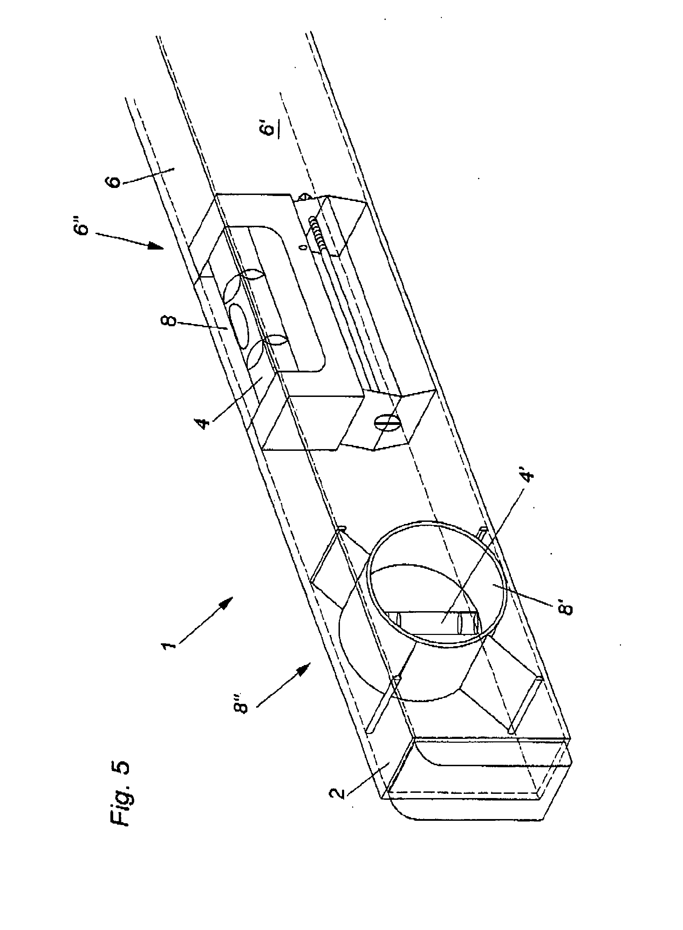

Fig. 5 zeigt eine fast vollkommen durchsichtige Wasserwaage 1, wobei der Profilkörper 2 aus durchsichtigem Aluminium hergestellt ist. Auch hier werden ebene Flächen entlang der Seitenflächen 6, 6', 6" der Wasserwaage 1 erreicht, da die Ausgleichsteile 8, 8', 8" ebenso aus durchsichtigem Aluminium hergestellt sind und bündig anschließen.

Die dargestellten Ausführungsbeispiele von Wasserwaagen, sowie das beschriebene Beispiel des möglichen Herstellungsverfahrens sind selbstverständllch nicht in einschränkendem Sinn zu verstehen, sondern eben nur einzelne Beispiele von zahlreichen Möglichkeiten um den Erfindungsgedanken einer Wasserwaage zu realisieren.

So wurden in diesen Ausführungsbeispielen zwar in jedem Falle Profilkörper 2 verwendet, welche als Hohlkörper ausgebildet sind, ebenso wäre es aber auch vorstellbar, den Profilkörper als Vollprofil oder jedem anderen Profil auszuführen.

### Bezugszeichenliste;

- 1: Wasserwaage
- 2: Profilkörper
- 3, 3': Ausnehmung des Profilkörpers
- 4, 4': Libelle
- 5, 5', 5": Abdeckung der Libelle
- 6, 6', 6": Seitenfläche des Profilkörpers
- 7, 7', 7", 7a', 7a": Stufe
- 8, 8',8": Ausgleichsteil
- 9, 9': Befestigungsvorrichtung
- 10: Schicht
- 11: Messfläche
- 12: Absenkung

## Patentansprüche

1. Wasserwaage mit wenigstens einer in einer Ausnehmung eines Profilkörpers der Wasserwaage angeordneten Libelle, welche gegebenenfalls mit einer Abdeckung versehen ist, wobei zwischen Libelle bzw. Abdeckung und Profilkörper an wenigstens einer Seitenflächen des Profilkörpers eine Stufe vorliegt, **dadurch gekennzeichnet, dass** ein Ausgleichsteil (8, 8', 8") vorgesehen ist, welcher die Stufe (7, 7', 7", 7a', 7a") zwischen Libelle (4, 4') bzw. Libelle (4, 4') mit Abdeckung (5, 5', 5") und Profilkörper (2) zu allen angrenzenden Seitenflächen (6, 6', 6") des Profilkörpers (2) hin ausgleicht.

2. Wasserwaage nach Anspruch 1, **dadurch gekennzeichnet, dass** der Profilkörper (2) im Wesentlichen als Hohlprofil ausgebildet ist,

3. Wasserwaage nach Anspruch 1 oder 2, **dadurch gekennzeichnet, dass** der Ausgleichsteil (8, 8',8") bereichsweise, vorzugsweise im Wesentlichen vollständig, für sichtbares Licht transparent ausgebildet ist.

4. Wasserwaage nach einem der Ansprüche 1 bis 3, **dadurch gekennzeichnet, dass** eine Seitenwand, vorzugsweise die Seitenwände, des Ausgleichsteils (8, 8', 8") zumindest bereichsweise zurückgesetzt ist.

5. Wasserwaage nach einem der Ansprüche 1 bis 4, **dadurch gekennzeichnet, dass** der Ausgleichsteil (8, 8', 8") eine bereichsweise, vorzugsweise im Wesentlichen vollständig, nichthaftende und / oder kratzfeste und / oder spiegelungsfreie und/oder selbstheilende Oberfläche aufweist.

6. Wasserwaage nach einem der Ansprüche 1 bis 5, **dadurch gekennzeichnet, dass** der Ausgleichsteil (8, 8', 8") bereichsweise, vorzugsweise im Wesentlichen vollständig, aus einer aushärtbaren Vergussmasse, vorzugsweise im Wesentlichen aus Epoxidharz, ausgebildet ist.

7. Wasserwaage nach einem der Ansprüche 1 bis 6, **dadurch gekennzeichnet, dass** der Ausgleichsteil (8, 8', 8") mit dem Profilkörper (2) vergossen ist.

8. Wasserwaage nach einem der Ansprüche 1 bis 7, **dadurch gekennzeichnet, dass** der Ausgleichsteil (8, 8', 8") mindestens eine, wenigstens bereichsweise selbsthaftende Schicht (10) aufweist, welche an dem Ausgleichsteil (8, 8', 8") montierbar und demontierbar ist, wobei die Schicht (10) zumindest bereichsweise, vorzugsweise im Wesentlichen vollständig, für sichtbares Licht transparent ausgebildet ist.

9. Wasserwaage nach einem der Ansprüche 1 bis 8, **dadurch gekennzeichnet, dass** die Libelle (4, 4') bzw. die Libelle (4, 4') mit Abdeckung (5, 5', 5") bzw. der Ausgleichsteil (8, 8', 8"), derart ausgebildet ist, dass die Messfläche (11) frei bleibt.

10. Verfahren zur Herstellung einer Wasserwaage (1), insbesondere nach einem der Ansprüche 1 bis 9, **dadurch gekennzeichnet, dass**
- in einem Verfahrensschritt die Libelle (4, 4') bzw. die Libelle (4, 4') mit Abdeckung (5, 5', 5") in dem Profilkörper (2) angeordnet wird und
- in einem weiteren Verfahrensschritt ein Ausgleichsteil (8, 8', 8") in den verbliebenen Raum der Ausnehmung (3, 3') eingebracht wird und den Raum, vorzugsweise im Wesentlichen vollständig, ausfüllt.

11. Verfahren nach Anspruch 10, **dadurch gekennzeichnet, dass** das Ausgleichsteil (8, 8', 8") aus einem aushärtbarem Material ausgebildet ist und durch Spritzgießen in den verbliebenen Raum der Ausnehmung (3, 3') eingebracht wird und den Raum der Ausnehmung (3, 3'), vorzugsweise im Wesentlichen vollständig, ausfüllt.

12. Verfahren nach Anspruch 10, **dadurch gekennzeichnet, dass** das Ausgleichsteil (8, 8', 8") aus einem aushärtbarem Material ausgebildet ist und durch Eingießen, vorzugsweise im Wesentlichen von Epoxidharz, in den verbliebenen Raum der Ausnehmung (3, 3') eingebracht wird und den Raum der Ausnehmung (3, 3'), vorzugsweise im Wesentlichen vollständig, ausfüllt.

13. Verfahren nach einem der Ansprüche 10 bis 12, **dadurch gekennzeichnet, dass** in einem weiteren Verfahrensschritt der als Hohlkörper ausgebildete Profilkörper (2), vorzugsweise im Wesentlichen vollständig mit Polyurethan. ausgeschäumt wird.

14. Verfahren nach einem der Ansprüche 10 bis 13, **dadurch gekennzeichnet, dass** in einem weiteren Verfahrensschritt die Oberfläche des Ausgleichsteils (8, 8', 8") an die angrenzende Seitenfläche (6, 6', 6") des Profilkörpers (2) angepasst, vorzugsweise abgeschliffen, wird, sodass durch die Seitenfläche (6, 6', 6") des Profilkörpers (2) und der Oberfläche des Ausgleichsteils (8, 8', 8") eine im Wesentlichen plane Fläche ausgebildet ist.

15. Verfahren nach Anspruch 14, **dadurch gekennzeichnet, dass** in einem weiteren Verfahrensschritt die Oberfläche des Ausgleichsteils (8, 8', 8") an zwei, vorzugsweise drei, angrenzende Seitenflächen (6, 6', 6") des Profilkörpers (2) angepasst, vorzugsweise abgeschliffen, wird, sodass durch die Seitenflächen (6, 6', 6") des Profilkörpers (2) und die Oberflächen des Ausgleichsteils (8, 8', 8") zwei, vorzugsweise drei, im Wesentlichen plane Flächen ausgebildet sind.
